# EUROPEAN PATENT APPLICATION

(11) **EP 4 530 989 A1**
(43) Date of publication of application: **02.04.2025**
(21) Application number: 24202650.8
(22) Date of filing: 25.09.2024
(51) Int. Cl.: G06T 11/60

(54) **INTELLIGENT OVERLAY GENERATION**

(30) Priority: 26.09.2023 US 202363585533 P; 18.09.2024 US 202418889083
(71) Applicant: Meta Platforms, Inc., Menlo Park, CA 94025 (US)
(72) Inventor: Sinha, Animesh, Menlo Park (US); Kalia, Anmol, Menlo Park (US); Sun, Bo, Menlo Park (US); Blanchard, Elliot, Menlo Park (US); Dougherty, Sean, Menlo Park (US); Bearman, Amy Lawson, Menlo Park (US); Paga, Arantxa Casanova, Menlo Park (US); Zhang, Chenyun, Menlo Park (US); Nelli Jr, Steven Anthony, Menlo Park (US); Mahajan, Dhruv Kumar, Menlo Park (US)
(74) Representative: Murgitroyd & Company

(57) **Abstract**

Various systems, methods, and devices are described for Al platform that may utilize a machine learning model configured to generate one or more overlays associated with a received input. In an example, systems and methods of generating one or more overlays may include receiving a media item and an input. The input may be natural language text or audio associated with a user. The machine learning model may be used to determine context associated with the input. Based on determining the context of the input, the machine learning model may generate one or more overlays. The user may select from the one or more overlays, indicating one or more overlays to user in conjunction to the media item. A combined media may be provided to the user where the selected overlays may be superimposed on the media item.

## Description

### TECHNOLOGICAL FIELD

The present disclosure relates generally to methods, apparatuses, and computer program products for using artificial intelligence for generating an image overlay.

### BACKGROUND

Electronic devices are constantly changing and evolving to provide the user with flexibility and adaptability. As electronic devices become more versatile, users are increasingly keeping them on their person during various everyday activities. This trend has led many users to seek avenues for self-expression. One such avenue is the capture and sharing of images, videos, or audio recordings. While these methods allow users to document their environment, they may also limit their ability to fully express themselves. For instance, users may wish to modify or interact with their captured media in order to further convey their unique perspective.

### SUMMARY

Disclosed herein are methods, apparatuses, or systems using an artificial intelligence (Al) platform to generate an overlay associated with an electronic device based on an input. The AI platform may be or associated with a social media platform or a messaging platform. In some examples, the AI platform may generate one or more overlays that may be added to a media item, such as an image, video, graphics interchange format (GIF), or the like. The AI platform may enable collaborative customization between one or more users, as one or more inputs associated with the one or more users may be received to generate one or more overlays for a media item.

According to a first aspect, there is provided a method comprising: receiving a media item; receiving an input, via a device associated with a user; using a machine learning model to analyze context of the input; generating based on the using of the machine learning model, one or more overlays associated with the context of the input; receiving one or more selections associated with the one or more overlays; generating, based on the media item and the one or more overlays, a combined media; and transmitting the combined media.

The input may comprise natural language text or natural language audio.

The combined media may be transmitted to a display of the device associated with the user.

The combined media may comprise the one or more selections associated with the one or more overlays superimposed on the media item.

The method may further comprise receiving an indication to share the combined media.

The one or more overlays may comprise one or more stickers.

The one or more overlays may be configured to be adjusted in relation to the media item.

The combined media may be configured to be iteratively adjusted in response to one or more inputs associated with one or more users.

The method may further comprise receiving feedback associated with the one or more overlays to iteratively train the machine learning model.

The media item may comprise an image or a video.

According to a second aspect, there is provided an apparatus comprising: one or more processors; and at least one memory storing instructions, that when executed by the one or more processors, cause the apparatus to carry out the method of the first aspect.

According to a third aspect, there is provided a computer-readable medium storing instructions that, when executed by a processor, cause the processor to carry out the method of the first aspect. The medium may be non-transitory.

According to a fourth aspect, there is provided a computer program product comprising instructions which, when the program is executed by a computer, cause the computer to carry out the method of the first aspect.

Additional advantages will be set forth in part in the description which follows or may be learned by practice. The advantages will be realized and attained by means of the elements and combinations particularly pointed out in the appended claims. It is to be understood that both the foregoing general description and the following detailed description are exemplary and explanatory only and are not restrictive, as claimed.

### BRIEF DESCRIPTION OF THE DRAWINGS

The summary, as well as the following detailed description, is further understood when read in conjunction with the appended drawings. For the purpose of illustrating the disclosed subject matter, there are shown in the drawings examples of the disclosed subject matter; however, the disclosed subject matter is not limited to the specific methods, compositions, and devices disclosed. In addition, the drawings are not necessarily drawn to scale. In the drawings:
FIG. 1 illustrates an example system, in accordance with an example of the present disclosure.
FIG. 2A illustrates an example method, in accordance with an example of the present disclosure.
FIG. 2B illustrates an example method, in accordance with an example of the present disclosure.
FIGS. 3A, 3B, 3C, and 3D illustrates an example implementation of the disclosed subject matter of the present disclosure.
FIG. 4 illustrates an example machine learning and training model, in accordance with an example, of the present disclosure.
FIG. 5 illustrates an example communication device, in accordance with an example of the present disclosure.
FIG. 6 illustrates an example computing system, in accordance with an example, of the present disclosure.

The figures depict various examples for purposes of illustration only. One skilled in the art will readily recognize from the following discussion that alternative examples of the structures and methods illustrated herein may be employed without departing from the principles described herein.

### DETAILED DESCRIPTION

Some examples of the present disclosure will now be described more fully hereinafter with reference to the accompanying drawings, in which some, but not all examples of the disclosure are shown. Indeed, various examples of the disclosure may be embodied in many different forms and should not be construed as limited to the examples set forth herein. Like reference numerals refer to like elements throughout.

As referred to herein, media item or media may refer to content items that may be shared, posted, or the like between one or more user device or profiles via a platform (e.g., a social media platform, a messaging platform, or the like). As examples, the media may include, but is not limited to, images, videos, stories, or the like.

Electronic devices are constantly changing and evolving to provide a user with flexibility and adaptability. With increasing adaptability in electronic devices, a user may want to take and maintain their electronic devices on their person during various everyday activities. This may lead to many a user wanting to share their thoughts and to express themselves. A user may want to express themselves via a messaging platform or an online platform, such as for example social media platforms. Some research has shown that the best self-expression online may rely on great visuals. Visual expression may be deeply contextual which may lead to a user wanting more creative control over media (e.g., text, images/photographs, audio, graphics interchange format (GIF), videos, stories, or the like) for users to utilize to express themselves.

In some systems, visual self-expression in messaging or online platforms may be limited to predefined media, such as static images, pre-generated stickers, videos, audio, and/or the like, which may go stale over time. In some examples, a platform may provide methods or systems for a user to add some personality and self-expression to an image, GIF, video, or stories. One such example that one or more platforms may utilize is stickers. The method of applying stickers may utilize a pre-generated database of stickers that are created and are not variable based on any user input. The method may provide minimal opportunity for contextualization, or creative control of media. Systems may further exacerbate some issues users may face with self-expression via captured media. Studies have shown that many users may lack the comfort to share or express themselves or their creativity via captured media items that may be shared via platforms, or third-party applications. Thus, creating ways for users to customize their images may allow users to better express themselves, which may lead to users having a richer and more engaging experience with platforms and engaging with other users over time.

The present disclosure is generally directed to systems and methods for an artificially intelligent platform in which artificial intelligence (Al) may be utilized to modify, or generate overlays (e.g., images, stickers, or the like) to be associated with one or more portions of a received media item. Examples of the present disclosure may include the use of an artificially intelligent (Al) platform utilizing machine learning to generate one or more overlays to capture the imagination and self-expression of users. In an example, the AI platform may include generating one or more overlays based on a received input, adding or removing previously generated overlays from a combined media, replacing one or more overlays associated with a combined media, adjusting the one or more overlays associated with the combined media, building ideas or illustrating self-expression between users to the media, or the like.

In an example, the AI platform may enable collaborative customization between one or more users associated with the AI platform. For example, a first user on a first device may create an initial customized media item comprising a media item and an initial generated overlay, and share it with a second user associated with a second user device. The second user may then provide their own input to the initial customized media item to further customize the media item. The server may generate new overlay suggestions based on an input associated with the second user, thus allowing the users (e.g., the first user and the second user) to iteratively enhance the shared media item. The collaborative customization features of the AI platform may enable new forms of creative interaction through shared media items between one or more users of a plurality of users. Collaborative customization may enhance user engagement on AI platform110s (e.g., social media platform, messaging platform, or the like).

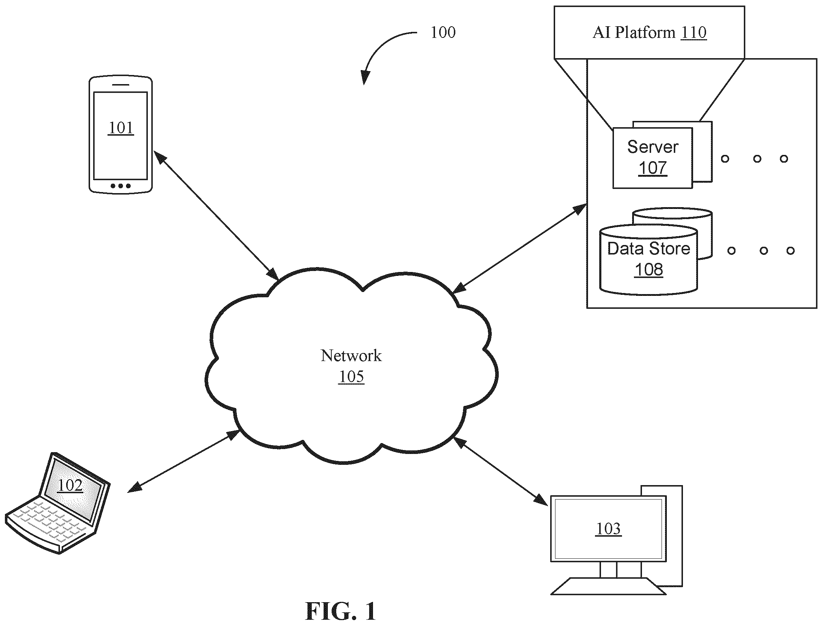

FIG. 1 illustrates an example intelligent overlay system 100, in accordance with an example of the present disclosure. The intelligent overlay system 100 may host an AI platform 110 (e.g., a social media platform, a messaging platform, or the like). The intelligent overlay system 100 may be capable of facilitating communications among users or provisioning of content among users. Intelligent overlay system 100 may include device 101, device 102, device 103, server 107, data store 108, and Al platform 110. As shown, for simplicity, AI platform 110 may be located on server 107. It is contemplated that Al platform 110 may be located on or interact with one or more devices of intelligent overlay system 100.

In particular examples, device 101, device 102, and device 103 may be associated with an individual (e.g., a user) that interact or communicates with Al platform 110. Al platform 110 may be considered a messaging platform (or a social media platform). In particular examples, one or more users may use one or more devices (e.g., device 101, 102, 103) to access, send data to, or receive data from Al platform 110 which may be located on server 107, device (e.g., device 101, 102, 103), or the like.

This disclosure contemplates any suitable network 105. As an example, and not by way of limitation, one or more portions of network 105 may include an ad hoc network, an intranet, an extranet, a virtual private network (VPN), a local area network (LAN), a wireless LAN (WLAN), a wide area network (WAN), or any combination thereof. Network 105 may comprise one or more wireline or wireless (links to facilitate communication between devices of system 10. Network 105 may include one or more networks 105.

In particular examples, device 101, 102, 103 may be an electronic device including hardware, software, or embedded logic components or a combination of two or more such components and capable of carrying out the appropriate functionalities implemented or supported by the device 101, 102, 103. As an example and not by way of limitation, device 101, 102, 103 may be a computer system such as for example, a desktop computer, notebook or laptop computer, netbook, a tablet computer (e.g., smart tablet), e-book reader, global positioning system (GPS) device, personal digital assistant (PDA), handheld electronic device, cellular telephone, smartphone, augmented/virtual reality device, other suitable electronic device, or any suitable combination thereof. This disclosure contemplates any suitable device (e.g., device 101, 102, 103). A device 101, 102, 103 may enable a user to access network 105. A device 101, 102, 103 may enable a user(s) to communicate with other users at another device 101, 102, 103.

Al platform 110 may be a network-addressable computing system that can host an online messaging network or a social media network. Al platform 110 may generate, store, receive, or send information associated with a user, such as, for example, user-profile data or other suitable data related to the Al platform 110. Al platform 110 may be accessed by one or more components of intelligent overlay system 100 directly or via network 105. As an example, and not by way of limitation, device 101 may access Al platform 110 located on server 107 by using a web browser or a native application on device 101 associated with Al platform 110 (e.g., a messaging application, a social media application, another suitable application, or any combination thereof) directly or via network 105.

Intelligent overlay system 100 may include one or more servers (e.g., server 107). Each server 107 may be a unitary server or a distributed server spanning multiple computers or multiple datacenters. Servers 107 may be of various types, such as, for example and without limitation, web server, news server, mail server, message server, advertising server, file server, application server, exchange server, database server, proxy server, another server suitable for performing functions or processes described herein, or any combination thereof. Each server 107 may include hardware, software, or embedded logic components or a combination of two or more such components for carrying out the appropriate functionalities implemented or supported by server 107. Intelligent overlay system 100 may include one or more data stores (e.g., data store 108). Data stores 108 may be used to store various types of information. The information stored in data stores 108 may be organized according to specific data structures. Each data store 108 may be a relational, columnar, correlation, or other suitable database. Although this disclosure describes or illustrates particular types of databases, this disclosure contemplates any suitable types of databases. Particular examples may provide interfaces that enable device 101, 102, 103 or another system (e.g., a third-party system) to manage, retrieve, modify, add, or delete, the information stored in data store 108.

Users of the Al platform 110 may have the ability to communicate and interact with other users. In particular examples, users associated with a particular device (e.g., device 101) may join the Al platform 110 and then add connections (e.g., relationships) to a number of other users (e.g., device 102, 103) constituting contacts of Al platform 110 to whom they want to communicate with. In some examples, user connections or communications may be monitored for machine learning purposes. In an example, server 107 of Al platform 110 may receive, record, or otherwise obtain information associated with communications or connections of users (e.g., device 101, device 102, or device 103). Herein, the term contact (e.g., a known user, co-worker, or club of friends) may refer to any other user of Al platform 110 in which there is indication of a connection or relationship.

Al platform 110 may provide users with the ability to take actions on various types of items. As an example, and not by way of limitation, the items may include groups to which a user may belong, messaging boards in which a user might be interested, question forums, messages between one or more users, interactions with images, stories, videos, comments under a post, or other suitable items. A user may interact with anything that is capable of being represented in Al platform 110. In particular examples, Al platform 110 may be capable of linking a variety of users. As an example, and not by way of limitation, Al platform 110 may enable users to interact with each other as well as receive content (e.g., media, text, or the like, or any combination thereof) from their respective group or contacts, wherein the group may refer to a chosen plurality of users are communicating or interacting through application programming interfaces (API) or other communication channels to each other.

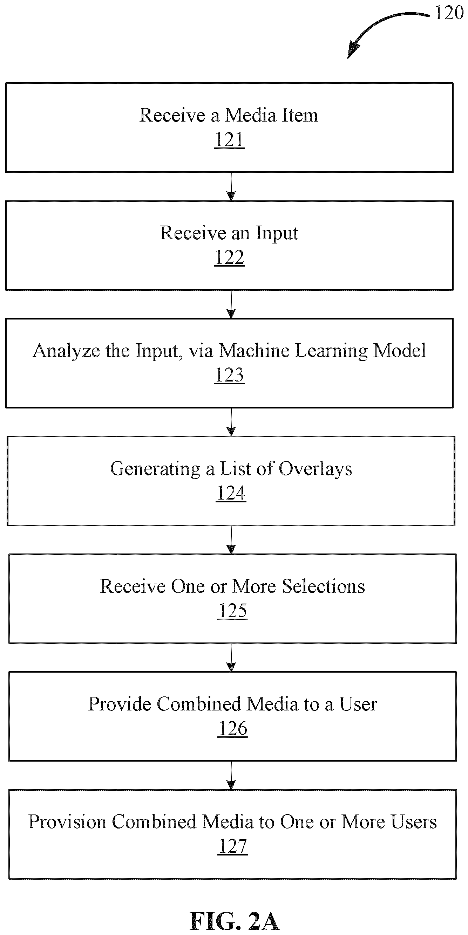

FIG. 2A illustrates a method 120 of generating (e.g., creating) one or more overlays in accordance with an example of the present disclosure. The method 120 may be performed by a device (e.g., communication device 30, computing system 600, device 101, device 102, or device 103). The device 101, for example, may utilize one or more of processors (e.g., processors 32, processor 91), memories (e.g., non-removable memory 44, removable memory 46, ROM 93, RAM 82), and/or a memory controller (e.g., memory controller 92) in part to perform the method 120.

At step 121, a media item (e.g., an image, a GIF, a story, a video, or the like) may be received. In some examples, a graphical user interface associated with device 101 may receive an indication to upload or otherwise obtain the media item. The media item may be captured by a camera of device 101 or selected from existing content stored on the device 101 or in data store 108 (e.g., cloud storage).

At step 122, an input may be received via a device 101 associated with a user. This input may serve as the basis for generating customized overlays to add to the media item. The input may comprise one or more of natural language (e.g., text), audio, or the like. For example, device 101 may receive text or an audio description, such as "Cute banana with heart eyes" in audio or text to request a specific type of overlay.

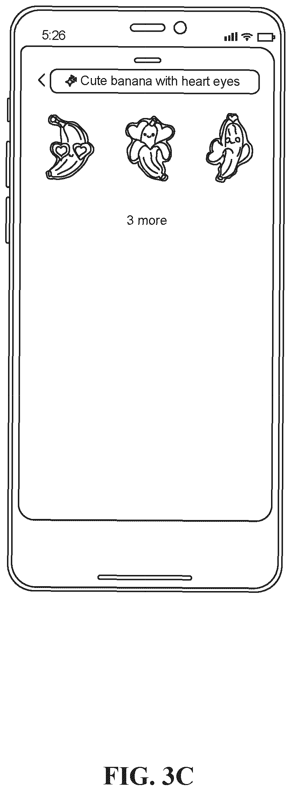

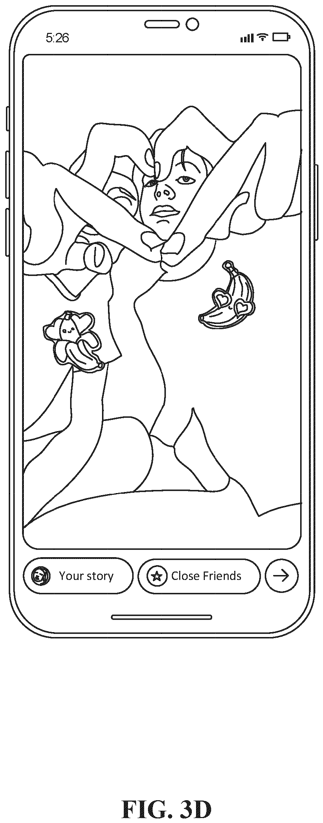

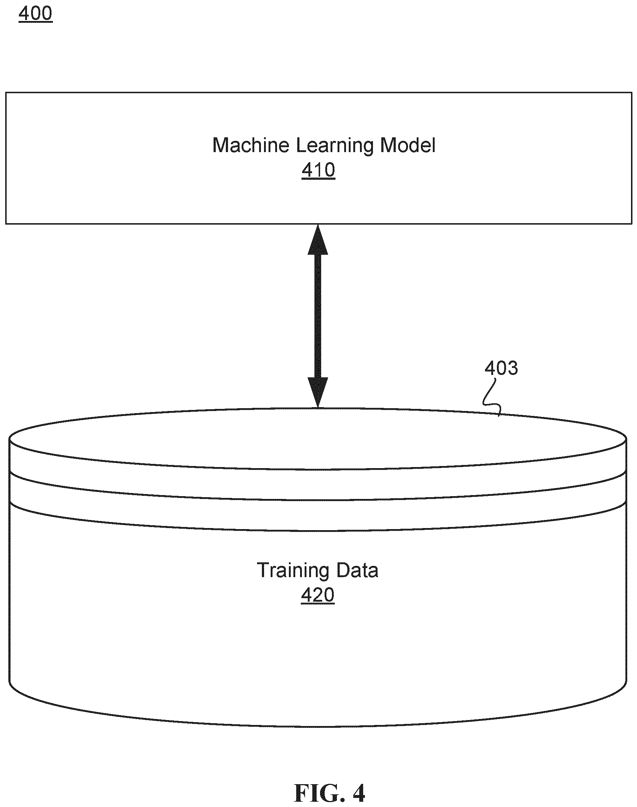

At step 123, the input or media item may be analyzed via a machine learning model (e.g., machine learning model 410 of FIG. 4). The machine learning model 410, via Al, may determine a context associated with the input or media item received. The context associated with the input or media item received may be determined via a nearest neighbor algorithm (e.g., nearest neighbor application, or nearest neighbor technique) by analyzing the input's semantic meaning and finding the most similar contexts in the training data (e.g., training data 420 of FIG. 4). This may be performed through a process called contextualized embedding, wherein the input is embedding into a high-dimensional vector space, allowing the machine learning model 410 to capture subtle nuances in meaning associated with the input received. The nearest neighbor algorithm may then search for the most similar vectors in the training data 420, which may represent the context(s) that are closest in meaning to the input received. The neighboring contexts are used to inform the model's understanding of the input, enabling the machine learning model 410 to accurately provide a relevant context associated with the received input. It is contemplated that the nearest neighbor algorithm may search for nearest neighbors using a number of different mathematical techniques, such as but not limited to, cosine similarity, Euclidean distance, or graph-based methods, depending on the specific model architecture and training data. The first result (e.g., the context) may be utilized further in the machine learning model 410 or one or more other machine learning models 410. For example, a user may provide an input such as, "Cute banana with heart eyes." The AI platform 110 may determine, via the machine learning model 410, that the context of the input received may be associated with a banana comprising or having heart eyes. In some examples, the input may be analyzed in conjunction with or in addition to the media item or a conversation between one or more users or one or more media items associated with a conversation between a one or more users (e.g., a group chat or the like). In an example, the media item may be illustrated as shown in FIG. 3D, the image may show heart shaped fingers of a person, which may be used as an indication of context for stickers to be shown (e.g., heart-shaped, or similarly formatted stickers). Therefore, in response to analysis, a text input of "Cute Banana" with consideration of the media item may cause the system to provide similar one or more overlays of bananas with heart-shaped eyes as shown in FIG. 3C.

At step 124, a machine learning model 410 (e.g., machine learning model 410) be utilized to reference database (e.g., a memory 44 or a database 108) to generate one or more overlays associated with the context (e.g., the first result) of the input. The machine learning model 410 may be configured to utilize the context to fetch (e.g., search) via a data store 108 image-text pairs nearest neighbors to generate a one or more overlays, wherein the image-text pairs may be associated with training data 420. The machine learning model 410 may utilize a nearest neighbor algorithm, where the machine learning model 410 may represent each image-text pair as a joint embedding. The joint embedding may capture both the visual features of the image and the semantic meaning of the text. In some examples, joint embedding may be obtained through deep learning architectures that combine neural networks (e.g., convolutional neural networks, or the like) for image processing and transformer-based large language models for text processing. The nearest neighbor algorithm may then search for a number of most similar image-text pairs to the context associated with step 123.

The number of most similar image-text pairs may be determined by any suitable mathematical method such as but not limited to, cosine similarity or dot product, to compare the received input's embedding (e.g., the context) with the embeddings of all image-text pairs in the data store 108. In some examples, a similarity metric may be used to measure how well the context associated with the input received aligns with the meaning of each image-text pair. Based on the similarity metric, the machine learning model 410 may select the top M image-text pairs with the highest similarity scores, wherein 'M' may be any suitable number determined by the AI platform 110, for example, M may be 10 image-text pairs. The top M image-text pairs may be selected and considered the nearest neighbors to the context associated with step 123, and the visual features associated with the top M image-text pairs may be utilized to facilitate the generation of one or more overlays that may be associated with the context of the input received. The machine learning model 410 may generate one or more overlays that may be provided via graphical user interface associated with the device 101.

With continued reference to step 124, in an example, the AI platform 110 may determine, via the machine learning model 410, an overlay associated with a banana with heart eyes based on the input "Cute banana with heart eyes." As such, the machine learning model 410 may generate one or more overlays via a graphical user interface associated with the device 101. The one or more overlays generated may be associated with a banana with heart eyes (e.g., one or more stickers comprising a banana with heart eyes). One of the one or more overlays may comprise a different rendition of the input received. In some examples, the one or more overlays may be generated based on an analysis in conjunction with or in addition to a conversation between one or more users or one or more media items associated with a conversation between one or more users (e.g., a group chat or the like). In some examples, the one or more overlays may be stored in a memory (e.g., non-removable memory 44, removable memory 46, ROM 93, or RAM 82) or database (e.g., data store 108) for future use. In such examples, one of the one or more overlays may be saved in the memory 44, wherein the one of the one of the one or more overlays may be selected (e.g., determined) to be saved or the overlay may have been used more than a selected threshold of times. The selected threshold may be determined via the AI platform 110 or settings associated with the device 101. It is contemplated that in some examples, that common (e.g., previously presented) context associated with input, the machine learning model 410 may reference a memory 44 or a data store 108 to provide one or more overlays previously stored. As disclosed herein, the one or more overlays may include one or more stickers - graphical elements that can be added on top of the original media item. The intelligent overlay system 100 may access data store 108 or other memory 44 to illustrate terms associated with the input (e.g., prompt), potentially creating multiple overlay options that match the description.

At step 125, one or more selections associated with the one or more overlays may be received. In an example, the device101 which may be associated with AI platform 110 (e.g., a messaging platform, social media platform, and/or the like) may receive one or more selections associated with the one or more overlays. The one or more selections may indicate a first overlay of the one or more overlays to be used with the media item received at step 121. In some examples, in response to one or more selections of the one or more overlays, a representation may be executed on device 101 to indicate one or more selections of the one or more overlays that have been selected. The representation may be provided via graphical user interface or any other suitable component of device 101. The representation may include one or more of haptic feedback, highlighting of one of the one or more overlays, or the like, to convey that one of the one or more overlays has been selected.

At step 126, the device 101 may generate, via a graphical user interface, a combined media. The combined media may comprise the one or more selections of the one or more overlays superimposed on the media item received at step 121. It is contemplated that the one or more selected overlays (e.g., one or more selections of the one or more overlays) superimposed on the media item may not overwrite or take place of any pixel information or media data associated with the media item. In some examples, the one or more selected overlays may be adjusted in relation to the media item. Adjusting the one or more selected overlays in relation to the media item may refer to, but not limiting to, one or more of enlarging, moving (e.g., to left, to right, up, or down, or any combination thereof), shrinking, rotating, turning, inverting, hiding a portion of, or the like, or any combination thereof, the one or more selected overlays. It is contemplated that adjustments to the one or more selected overlays in relation to the media item may be performed by any suitable movement of a device 101 or cursor associated with a device 101 in association with the graphical user interface associated with a device 101. For example, one of the one or more selections may be moved from right to left by moving a finger associated with the user from right to left on the surface of the graphical user interface.

At step 127, the combined media may be transmitted. The combined media may be transmitted to one or more user profiles associated with a AI platform 110 (e.g., social media platform) or device 102 via one or more graphical user interfaces associated with one or more users. In some examples, the combined media may be transmitted to one or more users (e.g., device 102 or AI platform 110) based on a press of a share button, wherein the share button may share the combined media on the AI platform 110, via image, post, video, story, or the like, or any combination thereof. The share button may further be configured as a send button between one or more users (e.g., a conversation between two or more users). In some examples, the device 101 may transmit the combined media to a group of users (e.g., users in a group chat). In some other examples, the steps of FIG. 2A need not occur iteratively or simultaneously and may occur in any suitable manner that need not be sequential. In some examples, the method 120 may further comprise a feedback selection, wherein the feedback selection may be utilized to aid in the training of the machine learning model 410. The feedback selection may be configured to allow the user to approve or disapprove of the one or more overlays generated. The disclosed method may occur on one device (e.g., device 101) or over a plurality of devices.

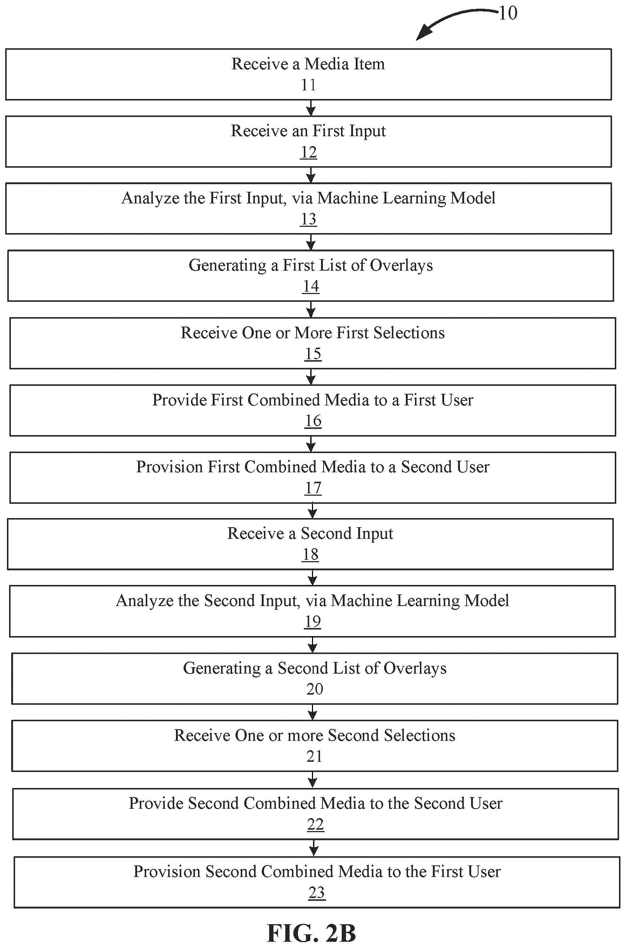

FIG. 2B illustrates a method 10 of intelligent overlay generation, in accordance with an example of the present disclosure. A device 101 may perform the method 10. At step 11, a first device 101, associated with a first user, may receive a media item (e.g., an image, a GIF, a story, a video, or the like). At step 12, a first input may be received by the first device 101. The first input may comprise one or more of natural language (e.g., text), audio, or the like. At step 13, the first input may be analyzed based on a machine learning model 410 (e.g., machine learning model 410 of FIG. 4). The machine learning model 410 may determine a first context associated with the first input received, similar to step 123.

At step 14, the first device 101 may utilize a machine learning model 410 may be utilized to reference data store 108 (e.g., a memory or database) to generate one or more first overlays associated the first context (e.g., the first result). The one or more overlays generated may be associated with a banana with heart eyes (e.g., one or more stickers comprising a banana with heart eyes). One of the one or more first overlays may comprise a different rendition of the first input received. Step 14 may be executed similarly to step 124.

At step 15, one or more first selections associated with the one or more first overlays may be received. In an example, a first device 101 which may be associated with AI platform 110 (e.g., a messaging platform, social media platform, and/or the like) may receive one or more first selections associated with the one or more first overlays. The one or more first selections may indicate one or more of the one or more overlays associated with the first user to use with the media item received at step 11. Step 15 may be executed similarly to step 125 of FIG. 2A. At step 16, a first device 101 may generate a first combined media. The first combined media may include the one or more first selections superimposed on the media item received at step 11. Step 16 may be executed similarly to step 126 of FIG. 2A.

At step 17, a first device 101 may facilitate transmission of the first combined media to a second user via a graphical user interface associated with a second device (e.g., device 102). In some examples, the first combined media may be transmitted to a second device 102 based on a press of a share button, wherein the share button may share the first combined media on the AI platform 110, via image, post, video, story, or the like, or any combination thereof. The share button may further be configured as a send button between the first user and the second user (e.g., a conversation between two or more users) of a plurality of users associated with the AI platform 110. In some examples, the first user (e.g., first device 101) may transmit the first combined media to the AI platform 110, where the AI platform 110 may, as a result, transmit the first combined media to the second device 102 associated with the second user.

At step 18, a second input may be received. The second input may include one or more of natural language (e.g., text), audio, or the like. The second input may be received on AI platform 110 or device 102 associated with a second user. At step 19, the second input may be analyzed based on a machine learning model 410. The machine learning model 410 may determine a second context associated with the second input received, similar to step 13. The second context associated with the second input received may be determined via a nearest neighbor algorithm (e.g., nearest neighbor application, or nearest neighbor technique) by analyzing the second input's semantic meaning and finding the most similar second contexts in the training data 420, similar to what is described with step 13. The second context associated with the second input (e.g., the second result) may be further utilized in the machine learning model 410 or one or more other machine learning model 410s. For example, a second device 102 may provide a second input such as, "Anime character kicking." The AI platform 110 may determine, via the machine learning model 410, that the second context of the second input received may be associated with an anime character performing a kick.

At step 20, the second device 102 a machine learning model 410) may be used to reference data store 108 (e.g., a memory 44 or database) to generate one or more second overlays associated the second context (e.g., the second result). The machine learning model 410 may be configured to utilize the second context to fetch via a data store 108 image-text pairs nearest neighbors to generate one or more second overlays, wherein the image-text pairs may be associated with training data 420. The machine learning model 410 may utilize a nearest neighbor algorithm, similar to what is described in step 14. Based on the similarity metric, as described with step 14, the machine learning model 410 may select the top M image-text pairs with the highest similarity scores, wherein 'M' may be any suitable number determined by the AI platform 110, for example, M may be 10 image-text pairs. The top M image-text pairs may be selected and considered the nearest neighbors to the second context associated with step 19, and the visual features associated with the top M image-text pairs may be utilized to facilitate the generation of one or more second overlays that may be associated with the second context of the second input received at step 18. The machine learning model 410 may generate one or more second overlays that may be provided via graphical user interface associated with the second device 102. For example, a second user may provide an second input such as, "Anime character kicking." The AI platform 110 may determine, via the machine learning model 410, that the second user may desire an overlay associated with an anime character kicking. As such, the machine learning model 410 may provide one or more second overlays via a graphical user interface associated with the second device 102. The one or more second overlays generated may be associated with an anime character kicking (e.g., one or more stickers comprising an anime character kicking). One or more of the one or more second overlays may comprise a different rendition of the second input received.

At step 21, one or more second selections associated with the one or more second overlays may be received. The one or more second selections may indicate one or more of the one or more second overlays associated with the second user to use with the combined media item received associated with step 17. In some examples, in response to the one or more second selections of one or more of the one or more second overlays, the second device 102 may be provided with a representation that may indicate the one or more second overlays that the second has been selected (e.g., one or more second selections). The representation may be provided via graphical user interface associated with the second device 102 or any other suitable component of a device (e.g., communication device 30).

At step 22, a second device 102 may display a second combined media. The second combined media may include the one or more second selections and one or more first selections superimposed on the media item. It is contemplated that the one or more second selections (e.g., one or more second selected overlays) superimposed on the first combined media may not overwrite or take place of any pixel information, media data, or overlay associated with the first combined media. In some examples, the one or more second selections may be adjusted in relation to the first combined media. Adjusting the one or more second selections (e.g., one or more second selected overlays) in relation to the first combined media may refer to, but not limited to, one or more of enlarging, moving (e.g., to left, to right, up, or down, or any combination thereof), shrinking, rotating, turning, inverting, hiding a portion of, or the like, of one or more second selected overlays. In an alternate example, the second user may be able to adjust the one or more first selections associated with the first user or the one or more second selections associated with the second user. It is contemplated that adjustments to the one or more second selections (e.g., one or more second selected overlays) in relation to the first combined media may be performed by any suitable movement associated with a second device 102. For example, one of the one or more second selections may be moved from right to left by moving a finger associated with the second user from right to left on the surface of the graphical user interface.

At step 23, a second device 102 may facilitate transmission of a second combined media to the first user via the graphical user interface associated with the first user (e.g., first device 101). The second combined media may include the one or more second selections superimposed on the first combined media. In some examples, the second combined media on the platform 110 may be shared, via image, post, video, story, or the like, or any combination thereof. There may be a share button configured as a send button between the first user and the second user (e.g., a conversation between two or more devices 101, 102, 103). In some examples, the second user (e.g., second device 102) may facilitate the transmission of the second combined media to a graphical user interface associated with a first user (e.g., first device 101).

It is contemplated that the steps of FIG. 2B need not occur iteratively or simultaneously and may occur in any suitable manner that need not be sequential. In some examples, the method 10 may further comprise a feedback selection, wherein the feedback selection may be utilized to aid in the training of the machine learning model 410. The feedback selection may be configured to allow the first user and the second user to approve or disapprove of the one or more overlays generated. In some examples, the one or more first overlays and the one or more second overlays may be generated based on analysis in conjunction with or in addition to a conversation between the first user and the second user, or one or more media items associated with a conversation between the first user and the second user.

It is contemplated that, although FIG. 2A and FIG. 2B may discuss a machine learning model 410 as a singular machine learning model 410, the steps, and methods of FIG. 2A and FIG. 2B may be performed by one or more machine learning model 410. It is contemplated that the machine learning model 410, as disclosed, may be on or more language models. In an example, the machine learning model 410 may be any suitable large language model.

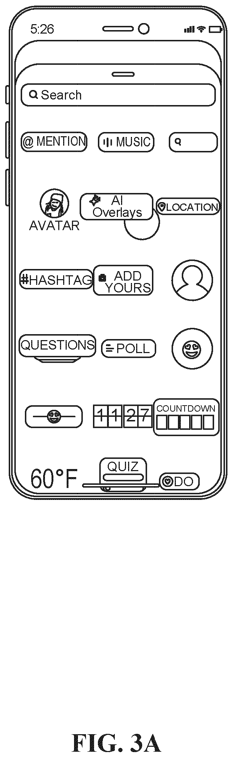

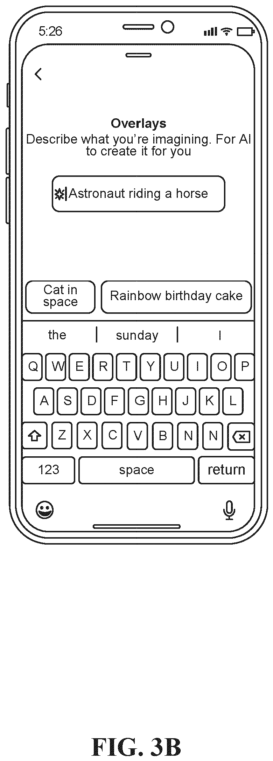

In reference to FIG. 3A, an example graphical user interface 300 may be illustrated. In an example, the graphical user interface 300 may refer to a landing page associated with the AI platform 110. The graphical user interface 300 may comprise one or more example overlays. FIG. 3B may illustrate an input 302 associated with the graphical user interface 300. The input 302 as illustrated may be a natural language text. The FIG. 3C may illustrate an example one or more overlays 303 generated via a machine learning based on the input 302. FIG. 3D may illustrate a combined media 304. The combined media may comprise one or more overlays superimposed on a media item received, in a manner as described in step 121.

FIG. 4 illustrates an example framework 400 that may be employed by the system 100 associated with machine learning. The framework 400 may be hosted remotely. Alternatively, the framework 400 may reside within the AI platform 110 as shown in FIG. 1or be processed by a device (e.g., computing system 600, communication device 30, device 101, device 102, or device 103). The machine learning model 410 may be operably coupled with the stored training data 420 in a training database 403 (e.g., data store 108). In some examples, the machine learning model 410 may be associated with other operations. The machine learning model 410 may implement one or more machine learning model 410(s) (e.g., a machine learning model 410 associated with step 205, or a machine learning model 410 associated with step 210) and/or another device (e.g., server 107, device 101, device 102, or device 103).

In another example, the training data 420 may include attributes of thousands of objects. For example, the objects may be smart phones, persons, books, newspapers, news articles, signs, cars, audio, images, movies, TV shows, other videos, other items, and the like. Attributes may include but are not limited to a size, shape, orientation, and position of an object, etc. The training data 420 employed by the machine learning model 410 may be fixed or updated periodically (e.g., by computing system 600, communication device 30). Alternatively, the training data 420 may be updated in real-time based upon the evaluations performed by the machine learning model 410 in a non-training mode. This is illustrated by the double-sided arrow connecting the machine learning model 410 and stored training data 420.

The machine learning model 410 may be designed to determine context associated with a received input. The context may include semantic meanings associated with the received input. The machine learning model 410 may be designed to find similar vector embeddings to the context, associated with the received input, to image-text paired embeddings. The machine learning model 410 may be a large language model to generate representations (e.g., vector spaces), or embeddings, of natural language or visual image data. These machine learning model 410 may be trained (e.g., pretrained and/or trained in real-time) on a vast amount of text data, and/or data capture of a wide range of language patterns and semantic meanings. The machine learning model 410 may understand and represent the context of words, terms, phrases and/or the like in a high-dimensional space, effectively capturing/determining the semantic similarities between different words, contexts, and situations, even when they are not exactly the same. For example, an input associated with "Bike with big wheels" may be associated with another input such as, "Motorcycle with big wheels" which may have been previously determined.

The machine learning model 410 may be designed to develop and predict associations between one or more images and one or more semantic meanings of text. In an example, the machine learning model 410 may utilize training data 420 to develop and predict associations between one or more of user interaction with media associated with the AI platform 110, previously selected overlays, context associated with a conversation, context of an input, media, or image data, or the like. The training data 420 may be historical data or data associated with one or more media, an input, previous inputs, contextual data, user interaction with media on the AI platform 110, or the like. The training data 420 may further include user profile data, wherein user profile data may comprise one or more of previous inputs, previously used overlays, user media interaction data associated with the AI platform 110, or the like, associated with a user or a specific "style" associated with the user of one or more users of the AI platform 110. In this example, the training data 420 may include associations between user profile data (e.g., style). The training data 420 may further include user interactions with content such as, but not limited to, captions, hashtags, likes, or the like, to aid in the formulation of image-text pairs. In some examples, user interaction with content items associated with AI platform 110 may provide information to the machine learning model 410 to generate one or more overlays. As an example, one or more overlays that may be shared frequently may steer the machine learning model 410 to generate similar overlays. As such, the training data 420 may further comprise share rates associated with one or more previously generated overlays.

In some examples, the machine learning model 410 may be implement a neural network. The neural network may assist in utilizing training data 420 or assisting with machine learning techniques to analyze the context associated with an input, and pair the context with image-text pairs that may be associated with historical data. In an example, the neural network may be trained based on historical data indicating joint embeddings between visual features of one or more images and one or more semantic meanings of text. The historical data may include, but not limited to, books, movies, news articles, magazines, TV shows, previous overlay selections of the user or other users, previous inputs, or the like. The neural network may be configured to process one or more images using a conventional architecture such as, but not limited to, a residual neural network. In some examples, the neural network may have modifications to accommodate specific image processing requirements. The neural network may comprise a transformer-based language model for processing text, which may be modified to accommodate specific text processing requirements associated with the AI platform. The textual embeddings may be used as conditions to an image generation model, such as a diffusion based image generation model, which may enable the machine learning model 410 to capture the semantic relationship between text and image pairs.

In operation, the machine learning model 410 may evaluate associations between an input(s) and an overlay. For example, an input (e.g., a search, interaction with a content item, etc.) may be compared with respective attributes of stored training data 420 (e.g., prestored objects).

In operation, the machine learning model 410 may evaluate attributes of media, e.g., text, images, videos, audio, or the like obtained by hardware (e.g., devices 101, 102,103). For example, the attributes of the extracted media (e.g., features from an image(s), video(s), reel(s), post(s), story, and/or text, etc.) may be compared with respective attributes of stored training data 420 (e.g., prestored objects).

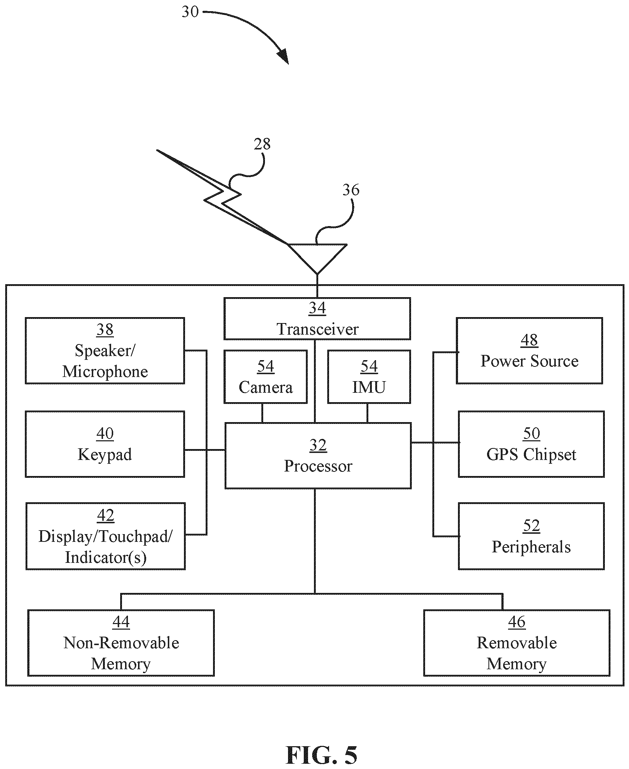

FIG. 5 illustrates a block diagram of an example hardware/software architecture of user equipment (UE) 30. As shown in FIG. 5, the UE 30 (also referred to herein as node 30) may include a processor 32, non-removable memory 44, removable memory 46, a speaker/microphone 38, a keypad 40, a display, touchpad, and/or indicators 42, a power source 48, a global positioning system (GPS) chipset 50, and other peripherals 52. The UE 30 may also include a camera 54. In an example, the camera 54 is a smart camera configured to sense images appearing within one or more bounding boxes. The UE 30 may also include communication circuitry, such as a transceiver 34 and a transmit/receive element 36. It will be appreciated that the UE 30 may include any sub-combination of the foregoing elements while remaining consistent with an example.

The processor 32 may be a special purpose processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. In general, the processor 32 may execute computer-executable instructions stored in the memory (e.g., memory 44 and/or memory 46) of the node 30 in order to perform the various required functions of the node. For example, the processor 32 may perform signal coding, data processing, power control, input/output processing, and/or any other functionality that enables the node 30 to operate in a wireless or wired environment. The processor 32 may run application-layer programs (e.g., browsers) and/or radio access-layer (RAN) programs and/or other communications programs. The processor 32 may also perform security operations such as authentication, security key agreement, and/or cryptographic operations, such as at the access-layer and/or application layer for example.

The processor 32 is coupled to its communication circuitry (e.g., transceiver 34 and transmit/receive element 36). The processor 32, through the execution of computer executable instructions, may control the communication circuitry in order to cause the node 30 to communicate with other nodes via the 28 to which it is connected.

The transmit/receive element 36 may be configured to transmit signals to, or receive signals from, other nodes or networking equipment. For example, in an example, the transmit/receive element 36 may be an antenna configured to transmit and/or receive radio frequency (RF) signals. The transmit/receive element 36 may support various networks and air interfaces, such as wireless local area network (WLAN), wireless personal area network (WPAN), cellular, and the like. In yet another example, the transmit/receive element 36 may be configured to transmit and receive both RF and light signals. It will be appreciated that the transmit/receive element 36 may be configured to transmit and/or receive any combination of wireless or wired signals.

The transceiver 34 may be configured to modulate the signals that are to be transmitted by the transmit/receive element 36 and to demodulate the signals that are received by the transmit/receive element 36. As noted above, the node 30 may have multimode capabilities. Thus, the transceiver 34 may include multiple transceivers for enabling the node 30 to communicate via multiple radio access technologies (RATs), such as universal terrestrial radio access (UTRA) and Institute of Electrical and Electronics Engineers (IEEE 802.11), for example.

The processor 32 may access information from, and store data in, any type of suitable memory, such as the non-removable memory 44 and/or the removable memory 46. For example, the processor 32 may store session context in its memory, as described above. The non-removable memory 44 may include RAM, ROM, a hard disk, or any other type of memory storage device. The removable memory 46 may include a subscriber identity module (SIM) card, a memory stick, a secure digital (SD) memory card, and the like. In other examples, the processor 32 may access information from, and store data in, memory that is not physically located on the node 30, such as on a server or a home computer.

The processor 32 may receive power from the power source 48 and may be configured to distribute and/or control the power to the other components in the node 30. The power source 48 may be any suitable device for powering the node 30. For example, the power source 48 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 32 may also be coupled to the GPS chipset 50, which may be configured to provide location information (e.g., longitude and latitude) regarding the current location of the node 30. It will be appreciated that the node 30 may acquire location information by way of any suitable location-determination method while remaining consistent with an example.

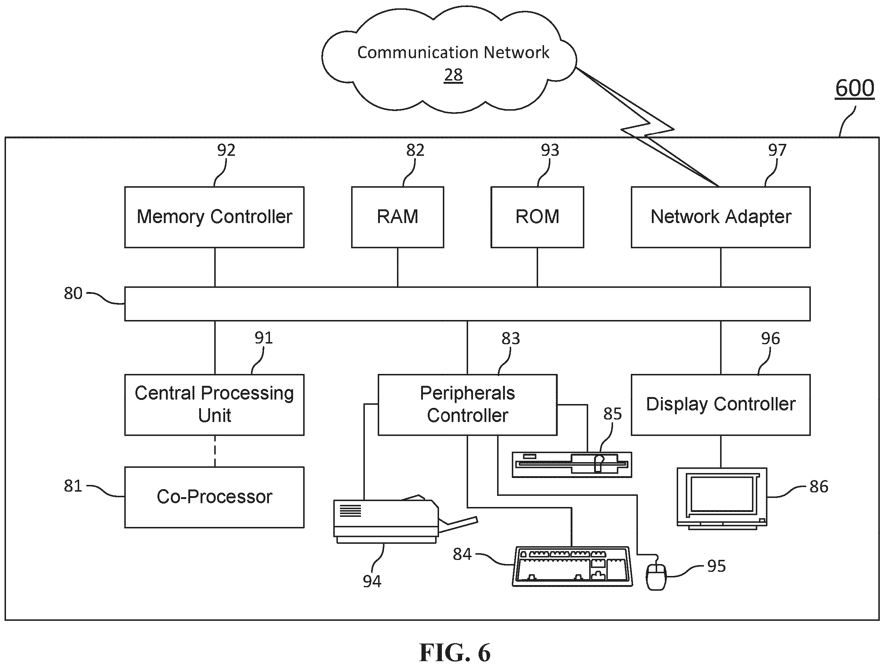

FIG. 6 is a block diagram of an exemplary computing system 600. In some examples, the network device 110 may be a computing system 600. The computing system 600 may comprise a computer or server and may be controlled primarily by computer readable instructions, which may be in the form of software, wherever, or by whatever means such software is stored or accessed. Such computer readable instructions may be executed within a processor, such as central processing unit (CPU) 91, to cause computing system 300 to operate. In many workstations, servers, and personal computers, central processing unit 91 may be implemented by a single-chip CPU called a microprocessor. In other machines, the central processing unit 91 may comprise multiple processors. Coprocessor 81 may be an optional processor, distinct from main CPU 91, that performs additional functions or assists CPU 91.

In operation, CPU 91 fetches, decodes, and executes instructions, and transfers information to and from other resources via the computer's main data-transfer path, system bus 80. Such a system bus connects the components in computing system 600 and defines the medium for data exchange. System bus 80 typically includes data lines for sending data, address lines for sending addresses, and control lines for sending interrupts and for operating the system bus. An example of such a system bus 80 is the Peripheral Component Interconnect (PCI) bus.

Memories coupled to system bus 80 include RAM 82 and ROM 93. Such memories may include circuitry that allows information to be stored and retrieved. ROMs 93 generally contain stored data that cannot easily be modified. Data stored in RAM 82 may be read or changed by CPU 91 or other hardware devices. Access to RAM 82 and/or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode may access only memory mapped by its own process virtual address space; it cannot access memory within another process's virtual address space unless memory sharing between the processes has been set up.

In addition, computing system 600 may contain peripherals controller 83 responsible for communicating instructions from CPU 91 to peripherals, such as printer 94, keyboard 84, mouse 95, and disk drive 85.

Display 86, which is controlled by display controller 96, is used to display visual output generated by computing system 600. Such visual output may include text, graphics, animated graphics, and video. Display 86 may be implemented with a cathode-ray tube (CRT)-based video display, a liquid-crystal display (LCD)-based flat-panel display, gas plasma-based flat-panel display, or a touch-panel. Display controller 96 includes electronic components required to generate a video signal that is sent to display 86.

Further, computing system 600 may contain communication circuitry, such as for example a network adaptor 97, that may be used to connect computing system 600 to an external communications network, such as network 28 of FIG. 5, to enable the computing system 600 to communicate with other nodes (e.g., UE 30) of the network.

It is to be appreciated that examples of the methods and apparatuses described herein are not limited in application to the details of construction and the arrangement of components set forth in the following description or illustrated in the accompanying drawings. The methods and apparatuses are capable of implementation in other examples and of being practiced or of being carried out in various ways. Examples of specific implementations are provided herein for illustrative purposes only and are not intended to be limiting. In particular, acts, elements and features described in connection with any one or more examples are not intended to be excluded from a similar role in any other examples.

It is to be understood that the methods and systems described herein are not limited to specific methods, specific components, or to particular implementations. It is also to be understood that the terminology used herein is for the purpose of describing particular examples only and is not intended to be limiting.

Some portions of this description describe the examples in terms of applications and symbolic representations of operations on information. These application descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as components, without loss of generality. The described operations and their associated components may be embodied in software, firmware, hardware, or any combinations thereof.

Any of the steps, operations, or processes described herein may be performed or implemented with one or more hardware or software components, alone or in combination with other devices. In one example, a software component is implemented with a computer program product comprising a computer-readable medium containing computer program code, which can be executed by a computer processor for performing any or all of the steps, operations, or processes described.

Examples also may relate to an apparatus for performing the operations herein. This apparatus may be specially constructed for the required purposes, and/or it may comprise a computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

As referred to herein, the term "post" or "posting" may refer to creating and publishing original content on a platform for one or more users to view. Posting may be an act of content creation that may include writing text, uploading images or videos, or sharing links. In some instances, posting may make the content visible to a specific audience or the public.

As referred to herein, the term "share" or "sharing" may refer to the act of redistributing existing content to amplify the reach and visibility of existing content. In some instances, sharing may involve taking content created by oneself or others and disseminating it through various online channels, often with added personal commentary or context.

The terms as referred to herein "posting" and "sharing" may differ primarily in their origin and purpose. In an example, posting may generally involve creating new content and initiating conversations, while sharing may focus on amplifying existing content and participating in ongoing discussions. In some instances, posting may require more effort in content creation, whereas sharing can be a quicker way to engage with and spread information across platforms or networks. In some instances, however, posting and sharing may be used interchangeably.

As referred to herein, the term "story" or "stories" may refer an content item associated with a social media platform that may allow one or more users to share one or more images, photos, videos, or the like, that may be visible for a limited time. In an example, the limited time may be 24 hours, but it is contemplated that the limited time may be any suitable increment of time. In an example, stories may often appear at the top of a user's feed and may include various enhancements to one or more images, photos, or videos shared. The enhancements may be one or more of filters, stickers, text, or the like, or any combination thereof.

As used herein, the terms "data," "content," "information" and similar terms may be used interchangeably to refer to data capable of being transmitted, received and/or stored in accordance with examples of the disclosure. Moreover, the term "exemplary," as used herein, is not provided to convey any qualitative assessment, but instead merely to convey an illustration of an example. Thus, use of any such terms should not be taken to limit the scope of examples of the disclosure.

As defined herein a "computer-readable storage medium," which refers to a non-transitory, physical, or tangible storage medium (e.g., volatile, or non-volatile memory device), may be differentiated from a "computer-readable transmission medium," which refers to an electromagnetic signal.

As referred to herein, an "application" may refer to a computer software package that may perform specific functions for users and/or, in some cases, for another application(s). An application(s) may utilize an operating system (OS) and other supporting programs to function. In some examples, an application(s) may request one or more services from, and communicate with, other entities via an application programming interface (API). It is contemplated herein that "users" and "device" are often used interchangeably.

As referred to herein, "artificial reality" may refer to a form of immersive reality that has been adjusted in some manner before presentation to a user, which may include, for example, a virtual reality, an augmented reality, a mixed reality, a hybrid reality, Metaverse reality or some combination or derivative thereof. Artificial reality content may include completely computer-generated content or computer-generated content combined with captured (e.g., real-world) content. In some instances, artificial reality may be associated with applications, products, accessories, services, or some combination thereof, that may be used to, for example, create content in an artificial reality or are otherwise used in (e.g., to perform activities in) an artificial reality.

As referred to herein, "artificial reality content" may refer to content such as video, audio, haptic feedback, or some combination thereof, any of which may be presented in a single channel or in multiple channels (such as stereo video that produces a three-dimensional (3D) effect to the viewer) to a user.

As referred to herein, a Metaverse may denote an immersive virtual space or world in which devices may be utilized in a network in which there may, but need not, be one or more social connections among users in the network or with an environment in the virtual space or world. A Metaverse or Metaverse network may be associated with three-dimensional (3D) virtual worlds, online games (e.g., video games), one or more content items such as, for example, images, videos, non-fungible tokens (NFTs) and in which the content items may, for example, be purchased with digital currencies (e.g., cryptocurrencies) and other suitable currencies. In some examples, a Metaverse or Metaverse network may enable the generation and provision of immersive virtual spaces in which remote users may socialize, collaborate, learn, shop and/or engage in various other activities within the virtual spaces, including through the use of Augmented/Virtual/Mixed Reality.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The foregoing description of the examples has been presented for the purpose of illustration; it is not intended to be exhaustive or to limit the patent rights to the precise forms disclosed. Persons skilled in the relevant art can appreciate that many modifications and variations are possible in light of the disclosure.

The scope of this disclosure encompasses all changes, substitutions, variations, alterations, and modifications to the example examples described or illustrated herein that a person having ordinary skill in the art would comprehend. The scope of this disclosure is not limited to the example examples described or illustrated herein. Moreover, although this disclosure describes and illustrates respective examples herein as including particular components, elements, feature, functions, operations, or steps, any of these examples may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular examples as providing particular advantages, particular examples may provide none, some, or all of these advantages.

Finally, the language used in the specification has been principally selected for readability and instructional purposes, and it may not have been selected to delineate or circumscribe the inventive subject matter. It is therefore intended that the scope of the patent rights be limited not by this detailed description, but rather by any claims that issue on an application based hereon. Accordingly, the disclosure of the examples is intended to be illustrative, but not limiting, of the scope of the patent rights, which is set forth in the following claims.

A method, system, or apparatus may provide for receiving a media item; receiving an input, via a device associated with a user; using a machine learning model to analyze context of the input; generating, based on the using of the machine learning model, one or more overlays associated with the context of the input; receiving one or more selections associated with the one or more overlays; and creating, based on the media item and the one or more overlays, a combined media; and transmitting the combined media. The combined media may be transmitted to a display of the device associated with the user. The combined media may comprise the one or more selections associated with the one or more overlays superimposed on the media item. The input may be natural language text or natural language audio. An indication to share or post the combined media may be executed. The indication to share or post may result in transmission of the combined media to one or more other users. The one or more overlays may comprise one or more stickers. The one or more overlays may be configured to be adjusted in relation to the media item. The combined media may be configured to be iteratively adjusted in response to one or more inputs associated with one or more users.

A system or apparatus may comprises executable instructions by a processor to perform the following: receive a media item and an input, via a device associated with a user; use a machine learning model to analyze the context of the input; generate, based on the use of the machine learning model, one or more overlays associated with the context of the input; receive one or more selections associated with the one or more overlays; create based on the media item and the one or more overlays, a combined media; transmit the combined media. The input may be natural language text or natural language audio. The combined media may be transmitted to a display of the device associated with the user. The media item can be an image or video. The combined media may comprise one or more selections associated with the overlays superimposed on the media item. An indication to share or post the combined media may result in the transmission of the combined media to one or more other users. The one or more overlays may comprise one or more stickers. The one or more overlays may be configured to be adjusted in relation to the media item. The combined media may be configured to be iteratively adjusted in response to one or more inputs associated with one or more users.

A method, system, or apparatus may provide for receiving a media item and a first input, via a first device associated with a first user; applying a machine learning model to analyze context of the first input; generating, via the machine learning model, a first list of overlays associated with context of the first input; receiving one or more first selections associated with one or more of the first list of overlays generated; providing, via graphical user interface of the first device or a second device of one or more devices, a first combined media; receiving a second input, via the second device associated with a second user, associated with the first combined media; applying the machine learning model to analyze context of the second input; generating, via the machine learning model, a second list of overlays associated with context of the second input; receiving one or more second selections associated with the one or more of the second list of overlays generated; and providing, via graphical user interface of the first device or the second device of one or more devices, a second combined media. All combinations (including the removal or addition of steps) in this paragraph and the above paragraphs are contemplated in a manner that is consistent with the other portions of the detailed description.

## Claims

1. A method comprising:
receiving a media item;
receiving an input, via a device associated with a user;
using a machine learning model to analyze context of the input;
generating based on the using of the machine learning model, one or more overlays associated with the context of the input;
receiving one or more selections associated with the one or more overlays;
generating, based on the media item and the one or more overlays, a combined media; and
transmitting the combined media.

2. The method of claim 1, wherein the input comprises natural language text or natural language audio.

3. The method of claim 1 or 2, wherein the combined media is transmitted to a display of the device associated with the user.

4. The method of any preceding claim, wherein the combined media comprises the one or more selections associated with the one or more overlays superimposed on the media item.

5. The method of any preceding claim, further comprising:
receiving an indication to share the combined media.

6. The method of any preceding claim, wherein the one or more overlays comprises one or more stickers.

7. The method of any preceding claim, wherein the one or more overlays is configured to be adjusted in relation to the media item.

8. The method of any preceding claim, wherein the combined media is configured to be iteratively adjusted in response to one or more inputs associated with one or more users.

9. The method of any preceding claim, further comprising:
receiving feedback associated with the one or more overlays to iteratively train the machine learning model.

10. The method of any preceding claim, wherein the media item comprises an image or a video.

11. An apparatus comprising:
one or more processors; and
at least one memory storing instructions, that when executed by the one or more processors, cause the apparatus to carry out the method of any preceding claim.

12. A computer-readable medium storing instructions that, when executed by a processor, cause the processor to carry out the method of any of claims 1 to 10.

13. A computer program product comprising instructions which, when the program is executed by a computer, cause the computer to carry out the method of any of claims 1 to 10.
